# EUROPEAN PATENT APPLICATION

(11) **EP 2 107 288 A1**
(43) Date of publication of application: **07.10.2009**
(21) Application number: 08006715.0
(22) Date of filing: 02.04.2008
(51) Int. Cl.: F16K 99/00

(54) **An active valve with a clamped membrane**

(71) Applicant: Danmarks Tekniske Universitet - DTU, 2800 Kongens Lyngby (DK)
(72) Inventor: Snakenborg, Detlef, 2900 Hellerup (DK)
(74) Representative: Sundien, Thomas

(57) **Abstract**

An active valve for use e.g. in fluidic microsystems is provided, wherein the active valve comprises a membrane having at least one flow gate arranged between a first and a second substantially rigid element. Adjusting means provides an adjustment of the clamping force on the membrane arranged between the first and second substantially rigid element. Hereby the flow rate through the active valve can be continuously controlled.

## Description

### FIELD OF THE INVENTION

The present invention concerns an active valve with a clamped membrane.

### BACKGROUND OF THE INVENTION

Since the first integrated circuit was invented, miniaturization has become an important research topic in both electronic and non-electronic devices. In the late 1970s, miniaturization was extended to mechanical devices with electronics, which is now known as microelectromechanical systems (MEMS). MEMS research has been largely encouraged by the first introduction of miniaturized total analysis systems, and MEMS systems are widely employed in areas from biomedical and drug delivery to space and fuel cell microfluidic systems. These systems have been reduced in size to micro scale for the realization of a fully integrated microfluidic system such as lab-on-a-chip or a micro total analysis system. Major advantages of miniaturization are the drastic decrease in chemical reaction time and less consumption of expensive chemical reagents as well as enhancement of reliability.

One of the key elements of microfluidic systems are microvalves used for controlling the flow. Microvalves found today generally fall into one of two major categories: active microvalves using mechanical and non-mechanical moving parts as well as external systems, and passive microvalves using mechanical and non-mechanical moving parts. A problem with existing microvalves and valve principles in general are that they are quite complex and negatively influence costs, reliability, production complexity and stability.

### OBJECT AND SUMMARY OF THE INVENTION

The objective of the present invention is to solve the above-mentioned problems.

This is done by providing an active valve, e.g. for use in connection with fluidic Microsystems, comprising at least one membrane clamped between at least a first and a second substantially rigid element, wherein the active valve comprises adjusting means for adjusting the clamping force on the membrane, and wherein the membrane comprises at least one flow gate. The advantage of this active valve is that the load or force acting on the clamped membrane creates a strain in the membrane, which determines the flow rate allowed through the flow gate of the membrane. This flow rate can be actively controlled and range from large to small, or even be zero, depending on the clamping force exerted on the membrane. The membrane is clamped between at least two rigid elements, whereby the desired strain in the membrane is obtained, enabling a continuous control of the flow rate through the membrane and thereby through the active valve. Advantageously the membrane is made of an elastic material.

In another embodiment the first and second element of the active valve comprises at least one hole. The advantage of including at least one hole in the rigid elements is that a very limited number of components constitute the active valve.

In a further embodiment the flow gate of the membrane in the active valve is a slit or incision. The advantage of this is that the flow gate can be opened by deflecting the membrane to either side. This could be done by applying a force, e.g. a fluidic pressure, to one side of the membrane, greater than the lateral strain in the membrane. When the membrane deflects, and thereby stretches, an opening appears where the slit or incision is placed. Advantageously, by varying the clamping force on the membrane, the force needed to deflect the membrane varies correspondingly.

In yet another embodiment the flow gate of the membrane is a hole. The advantage of this embodiment is that the flow through the hole can be regulated by varying the clamping force or load applied on the membrane. The smaller the load applied on the membrane, the greater the flow rate through the hole. Increasing the clamping force on the membrane will lead to a compression of the walls of the hole against each other. Hereby the active valve can also be closed.

In another embodiment at least one of the rigid elements of the active valve comprises a cavity, wherein said membrane can deflect and thereby open said active valve. This is a particular advantage when the flow gate of the membrane is a slit or incision as the cavity allows the membrane to deflect into the space provided by the cavity. Hereby e.g. fluid can pass through the flow gate. If only one rigid element comprises a cavity, the allowed flow direction is advantageously given by this cavity.

In a further another embodiment the flow gate in the membrane of the active valve is centered in front of the hole in at least one of said rigid elements. Hereby the flow through the membrane can advantageously pass unhindered through the rigid element.

In yet another embodiment, one hole in at least one of the rigid elements is displaced relative to the flow gate in the membrane. This is particularly an advantage when the active valve only allows flow in one direction. By combining a membrane where the flow gate is a slit or incision, a first rigid element comprising a cavity and a second rigid element without any cavity, such a unidirectional active valve can be obtained.

In a further embodiment the adjusting means of the active valve are mechanically activated. This could advantageously be a piston, a lever, a screw or the like, which could be both manually or automatically operated.

In yet another embodiment the adjusting means of the active valve are thermally activated. The advantage of thermal adjusting means is that the flow rate through the flow gate of the membrane can be regulated influencing the membrane thermally by cooling or heating.

In another embodiment the adjusting means of the active valve are electrically activated. This is an advantage as e.g. a whole microsystem can be controlled electronically, including the flow rate of every active valve.

In a further embodiment the adjusting means is magnetically activated. This is an advantage as the flow rate of the active valve can be controlled without building the adjusting means into the active valve.

In yet another embodiment the membrane of the active valve comprises a magnetisable or an excitable material. This is an advantage as the flow rate of the active valve can be controlled by influencing the magnetisable or the excitable material comprised in the membrane.

In another embodiment a pump comprises an active valve according to the present invention. In a further embodiment the active valve of the present invention is used as a fluidic pump. Since the principles of the active valve of the present invention can advantageously be used to control the flow rate through the active valve, this can advantageously be used in or as a pump.

In a further embodiment the present invention provides a method of controlling flow in an active valve comprising arranging a membrane with at least one flow gate between a first and a second substantially rigid element, and wherein the flow is controlled by adjusting the clamping force from the first and second rigid elements towards the membrane. Here the advantages are as outlined above.

### BRIEF DESCRIPTION OF THE DRAWINGS

In the following, preferred embodiments of the invention will be described referring to the figures, where
figure 1a illustrates the active valve principle according to the present invention, where a load acts on a supported membrane;
figure 1b illustrates the active valve principle according to the present invention, where a load acts on both sides of a membrane;
figure 2 illustrates a sectional view of an active valve, where the membrane comprises a slit or incision;
figure 3a illustrates a sectional view of an active valve in a closed state, where the membrane comprises a hole;
figure 3b illustrates a sectional view of an active valve in a open state, where the membrane comprises a hole.

### DESCRIPTION OF EMBODIMENTS

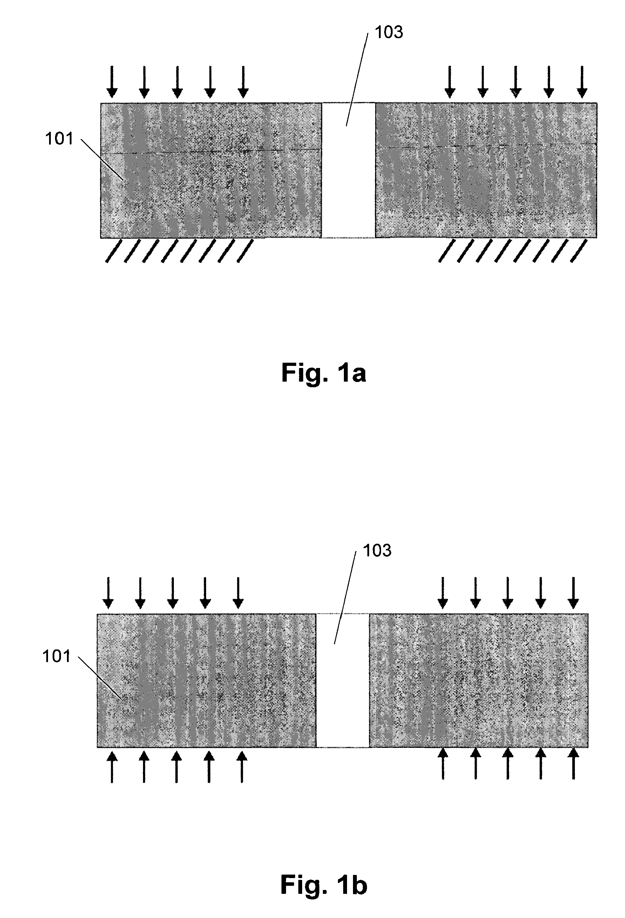

Figure 1a illustrates the valve principle according to the present invention, where a load acts on a supported membrane 101. Figure 1b illustrates the valve principle according to the present invention, where a load acts on both sides of a membrane 101. The membrane 101 comprises a flow gate 103 and is made of an elastic material. The applied load(s) creates a lateral strain in the membrane 101, which also influences the flow allowed through the gate. This means that by adjusting the load applied on the membrane 101, the opening of the flow gate 103 can be regulated, whereby the flow rate can range from high to low, or even be zero. The latter being the case where the applied load on the membrane 101 is so large that the flow gate 103 is fully closed. In one embodiment the flow gate 103 is a slit or incision in the membrane 101. In this case the flow gate 103 can be opened by deflecting the membrane 101 to either side. This could be done by applying a force, e.g. a fluidic pressure, to one side of the membrane 101, greater than the lateral strain in membrane 101. When the membrane 101 deflects, and thereby stretches, an opening appears where the slit or incision 103 is placed. By varying the load distributed to the membrane 101, the force needed to deflect the membrane 101 varies correspondingly. In another embodiment the flow gate 103 is a hole in the membrane 101. In this case the flow gate 103 can be opened by reducing the load applied to the membrane 101. Hereby the walls of the hole will no longer be compressed against each other, allowing e.g. a fluid to pass through the hole.

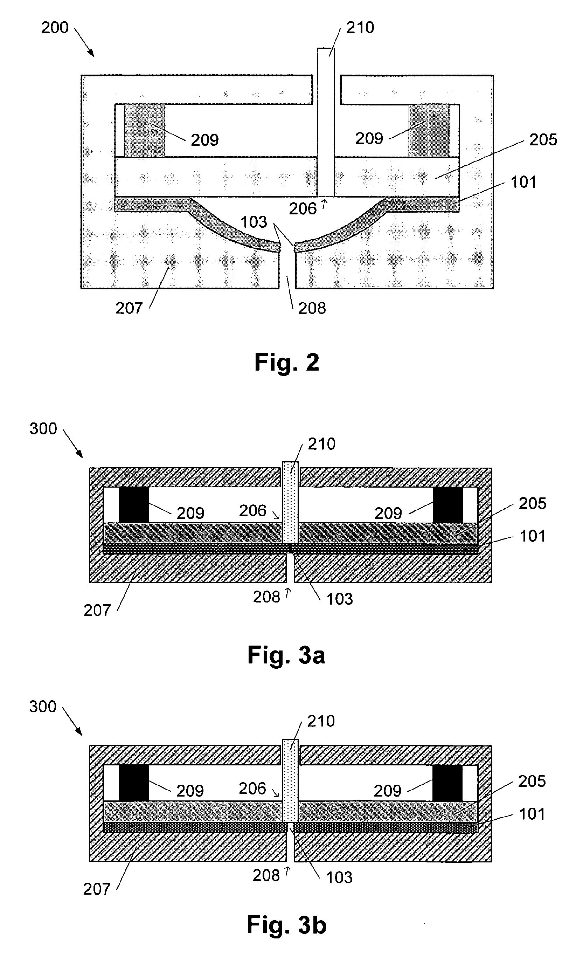

Figure 2 illustrates a sectional view of an active valve 200 according to the present invention. The active valve 200 comprises a first rigid element 205, a second rigid element 207 and a membrane 101 comprising an incision or slit 103. The flow hole 206 of the first rigid element 205 is displaced relative to the incision 103 of the membrane 101. The flow hole 208 of the second rigid element 207 is substantially centered relative to the incision 103 in the membrane 101. The active valve 200 further comprises an actuator 209 for adjusting the clamping force on the membrane 101. The actuator 209 can be used to adjust the lateral strain in the membrane 101. Hereby the force (e.g. pressure) needed to deflect the membrane 101 into the cavity of the second rigid element 207, creating an opening of the slit 103 in the membrane 101 over the hole 208, can be varied continuously. In one embodiment of the invention a pipe 210 is inserted in the first rigid element for e.g. passing fluid through the hole 206 of the first rigid element 205 to the hole 208 of the second rigid element 207 through an the incision 103 in the membrane 101. The fluid rate can via the actuator 209 be actively controlled or regulated. The activator 209 illustrated is, relative to the whole active valve 200, quite high. The activator can, however, have a much shorter stroke which would minimize the height of the active valve 200.

Figure 3a illustrates a sectional view of an active valve 300 in a closed state, where membrane 101 comprises a hole 103. The valve 300 comprises a first rigid element 205 having a flow hole 206 and a second rigid element 207 having a flow hole 208. The valve 300 further comprises an actuator 209 for adjusting the clamping force on the membrane 101. The actuator 209 can be used to adjust the lateral strain in the membrane 101 and thereby used to open and close the hole 103 in the membrane 101. In the present embodiment the hole 103 is closed. This means that the lateral strain in the membrane 101 compresses the walls of the hole 103 against each other. Thus, in this close state no fluid can pass through the active valve through holes 206, 103 and 208, regardless of the direction of such fluid.

Figure 3b illustrates a sectional view of an active valve 300 in a open state, where membrane 101 comprises a hole 103. The active valve 300 comprises a first rigid element 205 having a flow hole 206 and a second rigid element 207 having a flow hole 208. The active valve 300 further comprises an actuator 209 for adjusting the clamping force on the membrane 101. The actuator 209 can be used to adjust the lateral strain in the membrane 101 and thereby used to open and close the hole 103 in the membrane 101. In the present embodiment the hole 103 is open. This means that, compared to the embodiment in figure 3a, the lateral strain in the membrane 101 has a size that creates an access through the compressed walls of the hole 103. The lower the lateral strain in the membrane 101, the greater the opening of the hole 103. Hereby the fluid rate through 206, 103 and 208 of the active valve 300 can via the actuator 209 be actively controlled or regulated. In one embodiment of the invention a pipe 210 is inserted in the first rigid element 205 for e.g. passing fluid through the hole 206 of the first rigid element 205 to the hole 208 of the second rigid element 207 through the hole 103 in the membrane 101. The activator 209 can, in another embodiment, have a much shorter stroke, which would minimize the height of the active valve 300.

While this invention has been described in detail with reference to certain preferred embodiments, it should be appreciated that the present invention is not limited to those precise embodiments. Rather, in view of the present disclosure, which describes the current best mode for practicing the invention, many modifications and variations would present themselves to those skilled in the art without departing from the scope and spirit of this invention, which is limited only by the appended claims.

### REFERENCES

- 101: membrane
- 103: slit or incision
- 200: active valve
- 205: first rigid element
- 206: hole in first rigid element
- 207: second rigid element
- 208: hole in second rigid element
- 209: actuator
- 300: active valve

## Claims

1. An active valve, e.g. for use in connection with fluidic Microsystems, comprising at least one membrane clamped between at least a first and a second substantially rigid element, wherein said active valve comprises adjusting means for adjusting the clamping force on said membrane, and wherein said membrane comprises at least one flow gate.

2. An active valve according to claim 1, where said first and second element comprises at least one hole.

3. An active valve according to claims 1-2, where said flow gate is a slit or incision.

4. An active valve according to claims 1-2, where said flow gate is a hole.

5. An active valve according to claims 1-4, where at least one of said rigid elements comprises a cavity, wherein said membrane can deflect and thereby open said active valve.

6. An active valve according to claims 1-5, where said flow gate in said membrane is centered in front of said hole in at least one of said rigid elements.

7. An active valve according to claims 1-6, where one hole in at least one of said rigid elements is displaced relative to the flow gate in said membrane.

8. An active valve according to claims 1-7, wherein said adjusting means is mechanically activated.

9. An active valve according to claims 1-7, wherein said adjusting means is thermally activated.

10. An active valve according to claims 1-7, wherein said adjusting means is electrically activated.

11. An active valve according to claims 1-7, wherein said adjusting means is magnetically activated.

12. An active valve according to claims 1-11, wherein said membrane comprises a magnetisable or an excitable material.

13. A pump comprising an active valve according to any of the claims 1-12.

14. Use of an active valve according to any of claims 1-13 as a fluidic pump.

15. A method of controlling flow in an active valve comprising arranging a membrane with at least one flow gate between said first and said second substantially rigid elements, and wherein the flow is controlled by adjusting the clamping force from said first and second rigid element towards said membrane.
